**Europäisches Patentamt**

**European Patent Office**

**Office européen des brevets**

(19)

(11) Veröffentlichungsnummer: **0 342 431 B1**

## (12) EUROPÄISCHE PATENTSCHRIFT

(45) Veröffentlichungstag der Patentschrift:
24.07.91 Patentblatt 91/30

(51) Int. Cl.⁵: **F16D 23/14**

(21) Anmeldenummer: **89107982.4**

(22) Anmeldetag: **03.05.89**

(54) **Ausrücklagereinrichtung für eine gedrückte Kraftfahrzeugkupplung.**

(30) Priorität: **18.05.88 DE 3816890**

(43) Veröffentlichungstag der Anmeldung:
**23.11.89 Patentblatt 89/47**

(45) Bekanntmachung des Hinweises auf die
Patenterteilung:
**24.07.91 Patentblatt 91/30**

(84) Benannte Vertragsstaaten:
**DE ES FR GB IT**

(56) Entgegenhaltungen:
**FR-A- 1 429 359**
**FR-A- 2 313 597**
**FR-A- 2 352 989**
**GB-A- 2 185 083**
**US-A- 3 478 853**

(73) Patentinhaber: **INA Wälzlager Schaeffler KG**
**Industriestrasse 1-3 Postfach 1220**
**W-8522 Herzogenaurach (DE)**

(72) Erfinder: **Parzefall, Walter**
**Kettelerstrasse 1**
**W-8521 Bubenreuth (DE)**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung betrifft eine Ausrücklagereinrichtung für eine gedrückte Kraftfahrzeugkupplung, an der einerseits über ein Gehäuse eines Ausrücklagers ein Kupplungshebel angreift und an der andererseits Federzungen einer Kupplungstellerfeder anliegen, wobei das Gehäuse an einem getriebefesten Führungsrohr axial verschieblich geführt ist.

Eine derartige Ausrücklagereinrichtung für eine gedrückte Kraftfahrzeugkupplung ist in der DE-A-3612419 beschrieben. Die gedrückte Kraftfahrzeugkupplung wird dadurch entkuppelt, daß der Kupplungshebel über das Ausrücklager auf die Kupplungstellerfedern drückt. Der Kupplungshebel wird zum Entkuppeln an seinem einen Ende durch ein Betätigungsmittel kraftbeaufschlagt. Sein anderes Ende ist an einem Schwenkpunkt abgestützt, der bei der DE-A-3612419 als Dämpfungselement ausgebildet ist, um Schwingungen des Kupplungshebels im eingekuppelten Zustand zu dämpfen.

Bei bekannten Kupplungen wird das Ausrücklager ständig mit einer geringen Vorlast gegen die Tellerfeder gedrückt, so daß das Ausrücklager ständig, also auch im gekuppelten Zustand der Kupplung umläuft. Dadurch übertragen sich Schwingungen der Kurbelwelle und Ausrichttoleranzen zwischen der Kurbelwelle und der Getriebewelle sowie der Kupplungstellerfeder als Taumelbewegungen auf das Ausrücklager. Dies erhöht dessen Verschleiß. Durch eine exzentrisch zum Ausrücklager an dem Kupplungshebel angreifende, die Vorlast schaffende Feder läßt sich der Verschleiß nur im beschränkten Maße verringern, da dabei die Vorlast ihrerseits exzentrisch auf das Ausrücklager wirkt, was die Taumelbewegungen des Ausrücklagers sogar begünstigen kann.

In der DE-A-3611602 ist am Ausrücklager ein gewellter Unterlegring vorgesehen, um dem Ausrücklager eine axiale Flexibilität zu geben. Diese Anordnung ist bei einer Ausrücklagereinrichtung, die mittels eines Kupplungshebels betätigt wird, nicht einsetzbar.

Aufgabe der Erfindung ist es, eine Ausrücklagereinrichtung der eingangs genannten Art vorzuschlagen, die für die Berührung zwischen dem Ausrücklager und der Kupplungstellerfeder eine Vorlast schafft, welche an dem Ausrücklager konzentrisch angreift.

Erfindungsgemäß ist obige Aufgabe bei einer Ausrücklagereinrichtung der eingangs genannten Art dadurch gelöst, daß am Gehäuse eine gegenüber diesem und dem Führungsrohr axial verschiebliche Gleithülse angeordnet ist, daß zwischen einer Anlagefläche des Gehäuses und einem Bund der Gleithülse eine Druckfeder wirksam ist und daß im gekuppelten Zustand der Kupplung die Gleithülse einen getriebefesten Anschlag findet, wodurch die Druckfeder über das Gehäuse das Ausrücklager konzentrisch an die Federzungen der Kupplungstellerfeder drückt.

Dadurch ist erreicht, daß im gekuppelten Zustand die von der Druckfeder erzeugte Vorlast unabhängig von dem Kupplungshebel konzentrisch auf das Ausrücklager wirkt. Es ist dadurch eine definierte Vorlast zwischen der Kupplungstellerfeder und dem Ausrücklager erreicht. Die Druckfeder nimmt axiale Kurbelwellenschwingungen und Axialschläge der Kupplungstellerfeder auf. Damit ist insgesamt der Verschleiß des Ausrücklagers vermindert. Dies ist auch mit einer Verringerung der Geräuschentwicklung des Ausrücklagers verbunden.

Im ausgekuppelten Zustand ist die Druckfeder wirkungslos. Sie ist nicht durch die beim Auskuppeln auftretenden Kräfte belastet.

Durch die Anordnung der die Druckfeder stützenden Gleithülse am Gehäuse ist erreicht, daß das Ausrücklager mit seinem Gehäuse und der Gleithülse sowie der Druckfeder eine Baueinheit bildet, die sich einfach montieren läßt.

In bevorzugter Ausgestaltung der Erfindung umschließt die Gleithülse das Führungsrohr. Ihr Platzbedarf ist damit gering. Sie nimmt einen am Führungsrohr freien Raum ein, der für die Länge der Gleithülse und damit die Länge der Druckfeder keine besondere Einschränkung bedeutet. Weist das Führungsrohr einen Flansch auf, dann schlägt in bevorzugter Ausgestaltung der Erfindung der Bund im gekuppelten Zustand an dem Flansch an.

Um die Gleithülse und damit auch die Druckfeder unverlierbar an dem Gehäuse des Ausrücklagers zu halten, weist die Gleithülse vorzugsweise an ihrem dem Bund abgewandten Ende eine Anformung auf, die einem Rand des Gehäuses gegenübersteht, welcher der Anlagefläche der Druckfeder abgewandt ist, wobei im gekuppelten Zustand ein Spielraum zwischen der Anformung und dem Rand besteht.

Günstig ist bei der beschriebenen Einrichtung weiterhin, daß Verschleiß der Kupplung die Wirkung der Druckfeder nicht beeinträchtigt.

In bevorzugter Ausgestaltung der Erfindung ist an der Gleithülse eine die Druckfeder außen abdeckende Wandung ausgebildet, die in eine Ausnehmung des Gehäuses eingreift und in dieser verschieblich ist. Damit ist die Druckfeder an der Einrichtung gekapselt untergebracht.

Die beschriebene Einrichtung läßt sich bei Kraftfahrzeugkupplungen sowohl mit hydraulischer Betätigung als auch mit rein mechanischer Betätigung des Kupplungshebels verwenden.

Weitere vorteilhafte Ausgestaltungen der Erfindung ergeben sich aus Unteransprüchen und der folgenden Beschreibung eines Ausführungsbeispiels. In der Zeichnung zeigen:

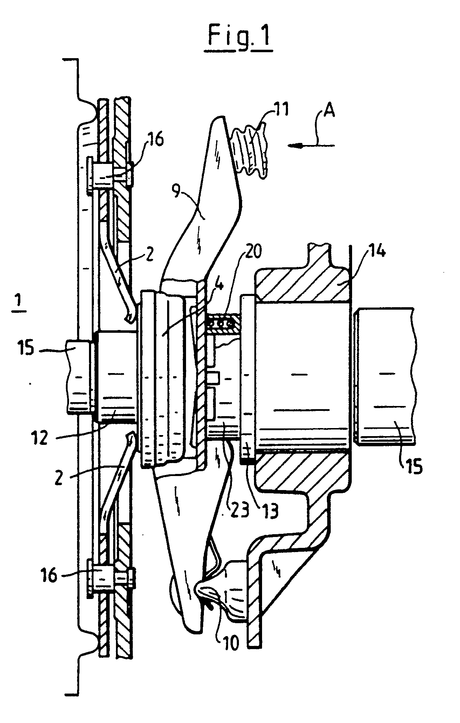

Figur 1 eine schematische Ansicht einer Kraftfahrzeugkupplung im gekuppelten Zustand,

Figur 2 eine Ausrücklagereinrichtung der Kupplung nach Figur 1 im ausgekuppelten Zustand, gegenüber Figur 1 vergrößert,

Figur 3 die Ausrücklagereinrichtung nach Figur 2 im gekuppelten Zustand und

Figur 4 die Ausrücklagereinrichtung im gekuppelten Zustand bei verschlissenem Kupplungsbelag.

Eine Kupplung (1) weist mit einer nicht näher dargestellten Kurbelwelle umlaufende Federzungen (2) einer Kupplungstellerfeder auf. Diese liegen an einem Innenring (3) eines Ausrücklagers (4) an, dessen Außenring (5) mit einem Gehäuse (6) verbunden ist. Zwischen dem Innenring (3) und dem Außenring (5) sind Wälzkörper (7) angeordnet.

Außen am Gehäuse (6) liegt an einem dem Innenring (3) abgewandten Bereich (8) ein Kupplungshebel (9) an. Dieser ist an seinem einen Ende an einem Schwenkpunkt (10) gelagert. An seinem anderen Ende greift ein Betätigungsmittel (11) an.

Das Gehäuse (6) mit dem Außenring (5) und dem Innenring (3) ist gegenüber einem Führungsrohr (12) verschieblich, das mittels eines Flansches (13) an einem Getriebegehäuse (14) befestigt ist. Durch das Führungsrohr (12) erstreckt sich eine Getriebewelle (15) in die Kupplung (1).

Die Funktionsweise der insoweit bekannten Ausrücklagereinrichtung ist im wesentlichen folgende :

Wird in Richtung des Pfeiles (A) von dem Betätigungsmittel (11) auf den Kupplungshebel (9) gedrückt, dann verschiebt dieser das Gehäuse (6) in Richtung des Pfeiles (a). Dadurch drückt der Innenring (3) auf die Federzungen (2) der Kupplungstellerfeder, so daß diese sich um ihre Befestigungsstellen (16) verschwenkt. Dadurch entkuppelt die Kupplung (1) die Getriebewelle (15) von der Kurbelwelle.

Nach der Erfindung ist auf dem Führungsrohr (12) eine diese umschließende Gleithülse (17) verschieblich gelagert. Die Gleithülse (17) erstreckt sich zwischen dem Gehäuse (6) und dem Führungsrohr (12) hindurch, wobei das Gehäuse (6) auf der Gleithülse (17) verschieblich geführt ist.

Die Gleithülse (17) weist einen Bund (18) auf. Zwischen dem Bund (18) und einer Anlagefläche (19) des Gehäuses (6) ist eine gewendelte Druckfeder (20) angeordnet.

Die Gleithülse (17) besteht aus Stahl oder aus einem polymeren Werkstoff. Die Gleithülse (17) ist durch eine Anformung (21), welche einem Rand (22) des Gehäuses (6) gegenübersteht, der auf der der Druckfeder (20) abgewandten Seite des Gehäuses (6) vorgesehen ist, an dem Gehäuse (6) unverlierbar gehalten. Besteht die Gleithülse (17) aus Stahl, dann ist die Anformung (21) eine Umbördelung. Besteht sie aus einem polymeren Werkstoff, dann kann die Anformung (21) von Schnappnasen gebildet sein.

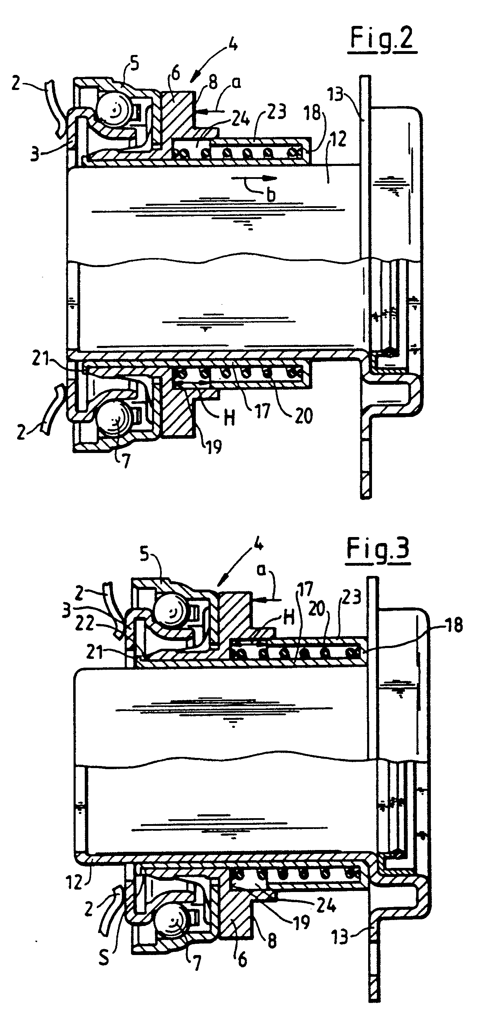

An der Gleithülse (17) ist eine die Druckfeder (20) außen abdeckende Wandung (23) ausgebildet. Die Wandung (23) greift in eine Ausnehmung (24) des Gehäuses (6). Für die Wandung (23) besteht in der Ausnehmung (24) ein freier Hub (H) (vgl. Figur 2 und 3).

Die Funktionsweise der beschriebenen Ausrücklagereinrichtung ist etwa folgende :

Im in Figur 2 dargestellten ausgekuppelten Zustand findet der Bund (18) an dem Flansch (13) keinen Anschlag. Die Druckfeder (20) drückt die Gleithülse (17) in Richtung des Pfeiles (b) bis die Anformung (21) der Gleithülse (17) am Rand (22) des Gehäuses (6) anschlägt. Die Gleithülse (17) ist damit gegen das Gehäuse (6) verspannt, so daß sie diesem gegenüber keine freien Bewegungen durchführen kann. Die Druckfeder (20) ist für den entkuppelten Zustand wirkungslos. Sie ist durch die beim Entkuppeln auftretenden Kräfte nicht belastet. Die Wandung ((23) und die Ausnehmung (24) sind so bemessen, daß auch dann noch die Wandung (23) in die Ausnehmung (24) greift, wenn die Anformung (21) an dem Rand (22) anschlägt. Die Druckfeder (20) ist also auch in dieser Stellung gegenüber der Umgebung gekapselt.

Bei dem in Figur 3 dargestellten, gekuppelten Zustand schlägt der Bund (18) der Gleithülse (17) an dem Flansch (13) an. Dadurch entsteht zwischen der Anformung (21) und dem Rand (22) ein Spiel (S). Dieses ist so bemessen, daß es größer ist als die zu berücksichtigenden Axialschläge. In dieser Stellung drückt die Druckfeder (20) auf die Anlagefläche (19) des Gehäuses (6), so daß dieses über den Außenring (5) und die Wälzkörper (7) den Innenring (3) konzentrisch gegen die Federzungen (2) der Kupplungstellerfeder drückt. Die Druckfeder (20) ist dabei so bemessen, daß die von ihr ausgeübte Vorlast wesentlich kleiner ist als die Kraft der Kupplungstellerfeder. Die Druckfeder (20) dämpft dabei konzentrisch direkt am Gehäuse (6) solche axiale Schwingungen, die über die Kupplungstellerfeder auf den Innenring (3) übertragen werden.

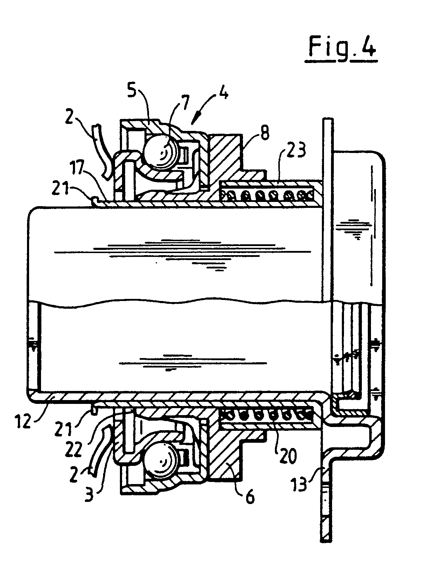

Im Zuge des Verschleißes des Kupplungsbelags wird von der Kupplungstellerfeder über den Innenring (3) das Gehäuse (6) weiter in Richtung des Flansches (13) geschoben (vgl. Figur 4). Dabei tritt die Wandung (23) zunehmend in die Ausnehmung (24) und die Druckfeder (20) spannt sich weiter. Die beschriebene Einrichtung paßt sich somit selbsttätig an den Verschleiß des Kupplungsbelages an, ohne daß hierfür ein mechanisches Nachstellen erforderlich ist. Der mögliche Hub (H) der Wandung (23) in der Ausnehmung (24) bis zum Anschlagen der Wandung (23) an der Anlagefläche (19) ist so bemessen, daß die Wandung (23) erst bei vollständigem Verschleiß des Kupplungsbelages auf die Anlagefläche (19) trifft (vgl. Figur 4).

## Patentansprüche

1. Ausrücklagereinrichtung für eine gedrückte Kraftfahrzeugkupplung (1), an der einerseits über ein Gehäuse (6) eines Ausrücklagers (4) ein Kupplungshebel (9) angreift und an der andererseits Federzungen (2) einer Kupplungstellerfeder anliegen, wobei das Gehäuse (6) an einem Führungsrohr (12) axial verschieblich geführt ist, **dadurch gekennzeichnet, daß** am Gehäuse (6) eine gegenüber diesem und dem Führungsrohr (12) axial verschiebliche Gleithülse (17) angeordnet ist, daß zwischen einer Anlagefläche (19) des Gehäuses (6) und einem Bund (18) der Gleithülse (17) eine Druckfeder (20) wirksam ist und daß im gekuppelten Zustand der Kupplung (1) die Gleithülse (17) einen getriebefesten Anschlag findet, wodurch die Druckfeder (20) über das Gehäuse (6) das Ausrücklager (4) konzentrisch an die Federzungen (2) der Kupplungstellerfeder drückt.

2. Ausrücklagereinrichtung nach Anspruch 1, **dadurch gekennzeichnet, daß** die Gleithülse (17) das Führungsrohr (12) umschließt.

3. Ausrücklagereinrichtung nach Anspruch 1 oder 2, wobei das Führungsrohr einen Flansch aufweist, **dadurch gekennzeichnet, daß** der Bund (18) im gekuppelten Zustand an dem Flansch (13) anschlägt.

4. Ausrücklagereinrichtung nach einem der vorhergehenden Ansprüche, **dadurch gekennzeichnet, daß** die Gleithülse (17) an ihrem dem Bund (18) abgewandten Ende eine Anformung (21) aufweist, die einem Rand (22) des Gehäuses (6) gegenübersteht, welcher der Anlagefläche (19) der Druckfeder (20) abgewandt ist, wobei im gekuppelten Zustand ein Spielraum (S) zwischen der Anformung (21) und dem Rand (22) besteht.

5. Ausrücklagereinrichtung nach einem der vorhergehenden Ansprüche, **dadurch gekennzeichnet, daß** an der Gleithülse (17) eine die Druckfeder (20) außen abdeckende Wandung (23) ausgebildet ist, die in eine Ausnehmung (24) des Gehäuses (6) eingreift und in dieser verschieblich ist.

6. Ausrücklagereinrichtung nach einem der vorhergehenden Ansprüche, **dadurch gekennzeichnet, daß** die Federkraft der Druckfeder (20) wesentlich kleiner als die der Kupplungstellerfeder ist.

7. Ausrücklagereinrichtung nach einem der vorhergehenden Ansprüche, **dadurch gekennzeichnet, daß** die Gleithülse (17) aus Stahl oder einem polymeren Werkstoff besteht.

8. Ausrücklagereinrichtung nach einem der vorhergehenden Ansprüche, **dadurch gekennzeichnet, daß** die Druckfeder (20) eine Schraubenfeder ist, die konzentrisch zum Gehäuse (6) angeordnet ist.

9. Ausrücklagereinrichtung nach einem der vorhergehenden Ansprüche, **dadurch gekennzeichnet, daß** die Druckfeder (20) im entkuppelten Zustand die Gleithülse (17) gegen das Gehäuse (6) spannt.

## Claims

1. Release bearing device for an automotive vehicle compression clutch (1), on one side of which a clutch lever (9) engages via a housing (6) of a release bearing (4) and against the other side of which spring tongues (2) of a clutch disc spring bear, wherein the housing (6) is axially displaceably guided on a guide tube (12), characterized in that a sliding sleeve (17), axially displaceable with respect to the housing (6) and the guide tube (12), is arranged on the housing (6), a compression spring (20) is effective between an abutment surface (19) of the housing (6) and a collar (18) of the sliding sleeve (17) and, in the engaged condition of the clutch (1), a stop fixed to the gearbox is provided for the sliding sleeve (17), the compression spring (20) thereby pressing the release bearing (4) concentrically against the spring tongues (2) of the clutch disc spring via the housing (6).

2. Release bearing device according to claim 1, characterized in that the sliding sleeve (17) surrounds the guide tube (12).

3. Release bearing device according to claim 1 or 2 wherein the guide tube comprises a flange, characterized in that, in the engaged condition, the collar (18) abuts against the flange (13).

4. Release bearing device according to one of the preceding claims, characterized in that, at its end facing away from the collar (18), the sliding sleeve (17) comprises a formation (21) which is situated opposite an edge (22) of the housing (6) facing away from the contact surface (19) of the compression spring (20), there existing, in the engaged condition, a clearance (S) between the formation (21) and the edge (22).

5. Release bearing device according to one of the preceding claims, characterized in that a wall (23) covering the compression spring (20) on the outside is formed on the sliding sleeve (17), which wall engages into a recess (24) of the housing (6) and is displaceable in this recess.

6. Release bearing device according to one of the preceding claims, characterized in that the spring force of the compression spring (20) is substantially smaller than that of the clutch disc spring.

7. Release bearing device according to one of the preceding claims, characterized in that the sliding sleeve (17) is made of steel or of a polymeric material.

8. Release bearing device according to one of the preceding claims, characterized in that the compression spring (20) is a coil spring which is arranged concentrically with the housing (6).

9. Release bearing device according to one of the preceding claims, characterized in that, in the disengaged condition, the compression spring (20 urges the sliding sleeve (17) against the housing (6).

## Revendications

1. Dispositif de butée pour un embrayage poussé de véhicule automobile (1) qui est attaqué d'un côté par un levier de débrayage (9) par l'intermédiaire d'un boîtier (6) d'une butée de débrayage (4), et contre l'autre côté duquel s'appuient des languettes élastiques (2) d'un ressort Belleville de l'embrayage, le boîtier (6) étant guidé en déplacement axial sur un tube de guidage (12), caractérisé en ce qu'un manchon coulissant (17), axialement déplaçable par rapport au boîtier (6) et au tube de guidage (12), est disposé sur le boîtier (6), un ressort de pression (20) est actif entre une surface de contact (19) du boîtier (6) et un collet (18) du manchon coulissant (17) et, à l'état embrayé de l'embrayage (1), le manchon coulissant (17) rencontre une butée fixée à la boîte de vitesses, grâce à quoi, le ressort de pression (20) pousse la butée de débrayage (4) par l'intermédiaire du boîtier (6), concentriquement contre les languettes élastiques (2) du ressort Belleville de l'embrayage.

2. Dispositif de butée selon la revendication 1, caractérisé en ce que le manchon coulissant (17) entoure le tube de guidage (12).

3. Dispositif de butée selon la revendication 1 ou 2, dans lequel le tube de guidage comprend une bride, caractérisé en ce qu'à l'état embrayé, le collet (18) bute contre la bride (13).

4. Dispositif de butée selon une des revendications précédentes, caractérisé en ce qu'à son extrémité opposée au collet (18), le manchon coulissant (17) comprend une partie formée (21) qui est située en regard d'un bord (22) du boîtier (6), lequel bord (22) est opposé à la surface de contact (19) du ressort de pression (20), un jeu (S) existant entre la partie formée (21) et le bord (22) à l'état embrayé.

5. Dispositif de butée selon une des revendications précédentes, caractérisé en ce qu'une paroi (23) recouvrant extérieurement le ressort de pression (20) est formée sur le manchon coulissant (17), laquelle paroi (23) s'engage dans un évidement (24) du boîtier (6) et est déplaçable dans cet évidement (24).

6. Dispositif de butée selon une des revendications précédentes, caractérisé en ce que la force de ressort du ressort de pression (20) est substantiellement inférieure à celle du ressort Belleville de l'embrayage.

7. Dispositif de butée selon une des revendications précédentes, caractérisé en ce que le manchon coulissant (17) est réalisé en acier ou en une matière polymère.

8. Dispositif de butée selon une des revendications précédentes, caractérisé en ce que le ressort de pression (20) est un ressort à boudin qui est agencé concentriquement au boîtier (6).

9. Dispositif de butée selon une des revendications précédentes, caractérisé en ce qu'à l'état débrayé, le ressort de pression (20) cale le manchon coulissant (17) contre le boîtier (6).

## Fig.1

Fig.2

Fig.3

Fig. 4